Europäisches Patentamt

European Patent Office

Office européen des brevets

(11) Publication number : **0 485 348 A2**

# (12) EUROPEAN PATENT APPLICATION

(21) Application number : **91830481.7**

(22) Date of filing : **06.11.91**

(51) Int. Cl.⁵ : **G07C 5/00**

(30) Priority : **07.11.90 IT 2198890**

(43) Date of publication of application :
**13.05.92 Bulletin 92/20**

(84) Designated Contracting States :
**AT BE DE ES FR GB GR NL**

(71) Applicant : **LOMBARDA TACHIGRAFO S.a.s. di
GIANFRANCO MARTINELLI & CO.
Via Zara, 32
Pioltello,(Milano) (IT)**

(72) Inventor : **Martinelli, Giancarlo
Via Padova, 330
Milano (IT)**
Inventor : **Baraldini, Claudio
Via Guido Rossa, 5
Rozzano, Milano (IT)**

(74) Representative : **Adorno, Silvano et al
c/o SOCIETA' ITALIANA BREVETTI S.p.A. Via
Carducci, 8
I-20123 Milano (IT)**

(54) **Portable apparatus for calibrating motor-vehicle chronotachographs.**

(57)   A portable apparatus for calibrating motor-vehicle chronotachographs, comprising everything necessary to work out its function with no need for external means, may be arranged close to the motor-vehicle, with a wheel thereof that can easily climb on such an apparatus for the calibrating operations. The apparatus comprises a mechanical part formed by a trolley on which two idle rollers are installed, rotated by friction by the driving wheel placed on them, one of said idle rollers being coupled to a transducer detecting the number of revolutions of the idle roller and therefore of the driving wheel. Said transducer is connected to the apparatus electronic part comprising a tester of known kind connected, in turn, to the chronotachograph to be calibrated in a known way. In a different embodiment a third idle roller is provided elastically pressed against the tread of the driving wheel supported by the other two rollers, and said transducer is connected to this third idle roller.

Fig.2

EP 0 485 348 A2

The present invention relates to a portable apparatus for calibrating motor-vehicle chronotachographs. It is known that on certain motor-vehicles, namely of heavy kind as lorries or trucks, chronotachographs are compulsorily provided which must be calibrated yearly, during the overhaul of the motor-vehicle. Usually such calibration consists in causing the vehicle to travel for a predetermined length and, by means of a mechanical device to be coupled to the gear-box output of the vehicle, detecting speed data to be compared with those registered by the chronotachograph to be calibrated. Drawbacks of such procedure are known, like the need of a rectilinear path some tens of meters long without holes or roughnesses, being necessary as well the presence of two operators to work out the test which needed even fourty minutes for each operation in case the chronotachograph was of electronic type, thus requiring the elaboration of data supplied by the mechanical device.

To avoid high costs for any fixed device installed exclusively for the purpose of the automatic calibration of the chronotachographs, it was invented by the same applicant by its patent application N. 22051 A/89, to use an already existing test area and namely the roller bench for brakes testing, without filling any more room with respect to the one already provided for such apparatus. On the brakes testing bench there was simply installed a cheap mechanical device coupled through a transducer to an electronic tester of known type, apt to display directly data coming from the chronotachograph.

Nevertheless some drawbacks remained mainly due to the need to drive anyhow the vehicle with the chronotachograph to be calibrated to a place where it already existed a fixed plant like a roller bench for brakes testing, that might be anyway modified to perform the different function of calibration of the chronotachograph. A further drawback was due to the fact that the vehicle had to climb on the apparatus with a pair of wheels, rotated by the driving roller of the testing bench to rotate, in turn, the idle roller on which the measure was made for the calibration, with consequent problems of centering and parallel arrangement of the two wheels, if an absolutely exact calibration was required.

It has been now conceived, and it constitutes the object of the present invention, an apparatus for calibrating motor-vehicle chronotachographs without the abovementioned drawbacks of the prior art, being portable and therefore movable close to the motor-vehicle that can climb on it by a shifting of even only few centimeters, with a safe and smooth manoeuvre, and with only one of its driving wheels that therefore will have no more problems with the centering and with the parallel arrangement. This way, especially where a lot of heavy motor-vehicles to be overhauled are concentrated, like for instance in the parking area of a transport company, it will be the calibrating apparatus to move from one to another motor-vehicle, with a considerable saving of time and personnel activity. Thus the driver will not be any more compelled to move a motor-vehicle, necessarily empty and therefore unused, for an outward and return journey to the test place, even some kilometers far away, and there to be present to the calibrating operations.

Such aim is attained by means of an apparatus consisting of a mechanical part comprising a trolley with an inclined plane climbing board and at least two idle rollers installed on the trolley with their axes parallel to each other and lying in a plane inclined with respect to the horizontal one, and transversal with respect to the maximum gradient line of said inclined plane climb board, and comprising as well an electronic part formed by a transducer coupled to one of said idle rollers and to an electronic tester of known kind generally described in the above mentioned patent application N. 22051 A/89. Obviously, with respect to that different apparatus, in this case the electronic tester must especially take into account, by means of preset data but with modifications within the reach of everyone skilled in the art, that only one of the driving wheels is rotating, being the other one stationary, therefore with double speed at the same number of revolutions of the driving shaft, and take into account as well any possible diameter difference of the roller on which the transducer is installed, and any different virtual distance covered by the stationary vehicle (thus depending on the number of revolutions of the wheel placed on the apparatus).

In a particular embodiment of this invention, to avoid that the counting of revolutions may be in any way altered and therefore the calibration may be not absolutely exact, because of the possible warping of the wheel on the roller deriving from the flattening due to the weight and/or to an insufficient inflating of the wheel, the apparatus may provide a third roller, parallel to the other two supporting the wheel of the vehicle, installed higher than these latter ones and on their ends, on steering arms external to said two rollers and pressed by springs against them, so that the contact between this third roller and the wheel occurs in the front area of its tread, above the two supporting rollers and in an elastically adjustable way, in this case said transducer being coupled to such a third roller to count the revolutions thereof.

These and other objects, advantages and characteristics of the apparatus according to the present invention will be clearer to those skilled in the art from the following detailed description of a preferred embodiment thereof, reported as a non-limiting example with reference to the attached drawings in which:

**Fig.1** shows a schematic block diagram of mechanical and electrical connections of the apparatus according to this invention;

**Fig.2** is a plan schematic view of a first embodiment of the apparatus according to this invention;

Fig.3 is a side view according to the "A" arrow in figure 2;

Fig.4 is a view similar to figure 2 for a different embodiment of the apparatus according to this invention;

Fig.5 is a view similar to the one in figure 3 for said different embodiment.

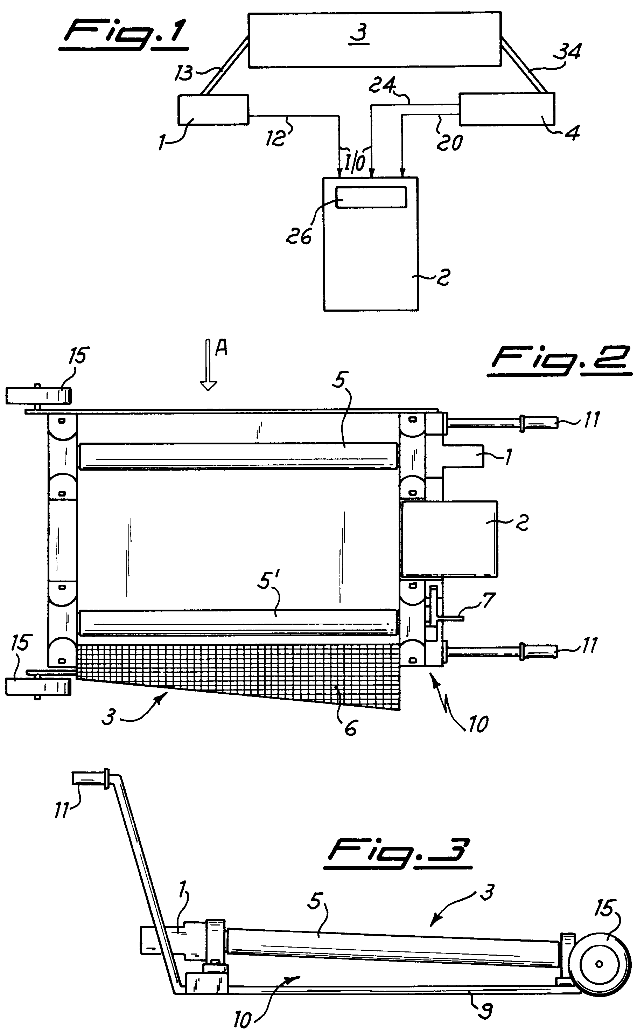

Referring to the drawings, Fig.1, absolutely similar to the corresponding figure of the above-mentioned patent application N. 22051 A/89, shows a diagram of the connections between the mechanical part of the apparatus, comprising the portable roller bench 3 and the transducer 1, the electric part or tester 2 and the motor-vehicle 4. The transducer 1 and tester 2 are substantially identical to the ones of the previous patent application, taking into account the abovementioned remarks about the tester presetting. Furthermore 13 and 34 diagrammatically show again mechanical connections between the roller bench and, respectively, transducer 1 and motor-vehicle 4, while 12 schematically indicates electrical connection between the transducer, converting the revolutions of the rotating mechanical device into electrical signals, and an I/O gate of the display tester 2 preferably of digital type. Like in the previous patent application, once again, another I/O gate receives the transmission line 24 of signals coming from the chronotachograph to be calibrated installed on the motor-vehicle 4 on the gear-box output thereof, while the low voltage mains 20 is preferably connected to a plug on the motorvehicle.

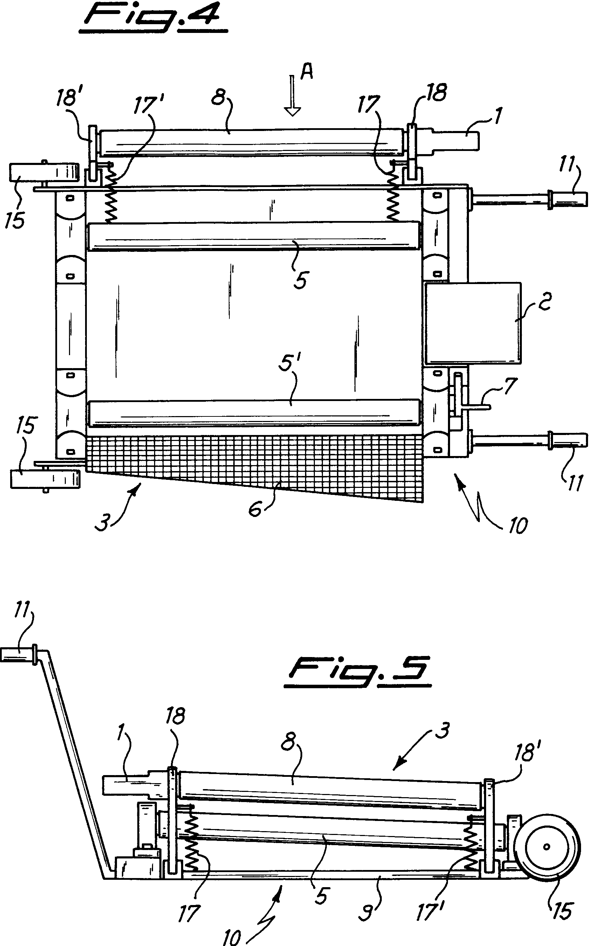

According to this invention it is now described the mechanical part 3 of the apparatus in a first embodiment as illustrated in figs. 2 and 3. On a trolley 10 provided with two driving and guiding handles 11 and with a pair of wheels as well on the opposite side, a pair of idle rollers 5,5′ are installed parallel to each other and at the same height with respect to base 9 of trolley 10. Coaxially with idle roller 5 a transducer 1 is applied integrally or through any transmission means, apt to convert revolutions of roller 5 axis into electrical signals, thus acting as an encoder. Coded data are transmitted to the electronic tester 2, directly installable on the apparatus in a suitable side drawer. The block diagram of tester 2, anyhow of known type, may be, for instance, the one represented in figure 4 in the italian patent application N. 22051 A/89.

As it may be seen in fig.3 rollers 5,5′ are preferably sloped of the same angle with respect to the horizontal line , so that to aid the perpendicularity between their surfaces, especially of the roller coupled to the transducer, and the tread of the driving wheel which will be arranged on the rollers. The slope will allow the climbing on the rollers of the right or left wheel so that to leave outwards of the motor-vehicle the apparatus portion comprising handles 11, transducer and tester. On this side the axes of rollers 5,5 ′ will be higher with respect to the opposite internal side, in correspondence of wheels 15 of the trolley.

Referring as well to fig. 2, to help the climbing of the motor-vehicle on the apparatus 3 so that to reach rollers 5,5′ without jolts and jerks, a climb board 0 is provided, properly sloped, whose maximum gradient lines are all perpendicular to the axes of rollers 5,5′ with a length gradually increasing towards the highest end of the rollers on the side 3 as clearly results from the plan view in fig.2 where the line of contact with the ground, or lower edge of the climb board 0, is an oblique line. A brake 7 may be provided as well to stop the rotation of the rollers once the calibration has been accomplished, so that to help the descent of the motor-vehicle.

Referring to figs. 4 and 5 there is illustrated a different embodiment of the apparatus according to the present invention, in which equal reference numbers are used for equal members. In this embodiment the transducer 1 is installed, instead of on roller 5, on a third roller, parallel to the other ones but arranged at a higher level and outwards with respect to these ones. This third roller is preferably mounted, at each end, on arms 18,18′ the lower end of which is pivoted on base 9 of the trolley, on the opposite side of board 6 with respect to external roller 5. The two arms 18, 18′ are elastically pressed towards roller 5, i.e. to the inside of the apparatus, for instance by coil springs 17,17′.

Referring to the drawings the operation is as follows. After having arranged the roller bench as close as possible to one of the driving wheels of the motor-vehicle, this one is caused to climb, by shifting it of a few centimeters, at first on climb board 6 reaching at last the position on rollers 5,5′. Assuming the trolley arranged as in figs. 2 and 4, the motor-vehicle will climb on it with a right wheel of its, thus leaving accessible from the outside those portions to be operated to move the trolley, like handles 11, or those which must be read for the calibration, like tester 2. The slope of the rollers and consequently of the climb board is the cause of the wider contact between the tread of the wheel and the rollers themselves. Tester 2 may be already connected, internally to the apparatus, with transducer 1, if permanently installed on the trolley, and will be connected with motor-vehicle 4 and its chronotachograph to be calibrated according to diagram in fig. 1. Upon starting motor-vehicle 4, rollers 5,5′ are caused to rotate at a certain speed driven by the motor-vehicle wheel at the same number of revolutions, assuming the lack of mutual sliding, absolutely unlikely when the external surface of the rollers is covered, for instance, by rubber.

As afore said, when it is desired to avoid warpings of the driving wheel in its area of contact with the testing roller, especially in case of insufficient inflating, and these warpings could bring to make mistakes in the calibration of the chronotachograph, the solution in fig. 4 and 5 will be chosen, in which the testing roller is the one designated 8, elastically pressed against the tread of the wheel by which it is driven by friction avoiding that said wheel, resting on it, is in any way warped.

Through transducer 1 the signals proportional to the number of revolutions of the driving wheel are anyway registered by tester 2 that, at the same time, registers and displays in 26 signals coming from the chronotachograph, being already preset in a known way (and taking into account the particular conditions of working, as above said) on a number of pulses corresponding to a length, for instance of 200 m. When this number of pulses is reached the counting is blocked of the signals received in the meantime from the gear-box output, i.e. at the input of the chronotachograph to be calibrated. If such a number does not correspond to the one determined during the first calibration of the same motor-vehicle with respect to an equal testing length, the necessary adjustements will be made.

The advantages obtained with respect to the prior art are clear, as it is not necessary the presence of personnel intended to signal the departure and the stopping of the motor-vehicle with all the unavoidable mistakes deriving from it and being prevented the other possible source of mistakes due to any hole or roughness on the path that may be, on the other hand, extended at will. The advantages are clear as well with respect to the patent application N. 22051 A/89 because of the characteristic of transportation by virtue of which every place is suitable for the calibration without any significant motor-vehicle manoeuvre. The operation of climbing on and down of the motor-vehicle on the apparatus is smooth and gradual thanks to the cooperation of the other wheel resting on the ground, while the climbing down is made easier being possible to keep blocked at least one of the rollers by means of brake 7.

**Claims**

1. Apparatus for calibrating motor-vehicle chronotachographs, comprising an electronic part (2) and a mechanical part (3) connected to each other, characterized in that said mechanical part (3) is portable being formed by a trolley (10) with inclined plane climb board (6) and at least two idle rollers (5,5′ ;8) installed on said trolley (10) with their axes parallel to each other and transversal with respect to the maximum gradient line of said inclined plane climb board (6), to an end of one of said idle rollers (5;8) there being applied a transducer to convert the number of revolutions of the roller itself in electrical signals then transmitted to said electronic part (2) formed by a tester of known kind connected in turn to the chronotachograph to be calibrated.

2. Apparatus according to claim 1, characterized in that said trolley (10) comprises a frame with base (9), two wheels (15) for the transportation of the trolley, arranged on an adjacent side of its transversal to said climb board (6), two handles to drive and guide trolley (10) on the opposite side with respect to the one of wheels (15), and a brake (7) to block at least one of said rollers (5,5′).

3. Apparatus according to claims 1 and 2, characterized in that said tester (2) is directly installed on the trolley frame and permanently connected with said transducer (1), the two both being arranged on the same side of handles (11) and brake (7).

4. Apparatus according to claim 3, characterized in that the axes of said idle rollers (5,5′) define an inclined plane having its maximum gradient lines perpendicular with respect to the ones of said climb board (6), the lower end of each roller corresponding to the side of trolley (10) on which said wheels (15) are installed, and the higher end, corresponding to the external side of the external wheel of the motor-vehicle intended to climb on the apparatus, corresponding to the side in which transducer (1), tester (2) and handles (11) are provided, the upper edge of said climb board (6) being as well sloped so that to reach in every point of its, the same height of roller (5′) adjacent to the board itself.

5. Apparatus according to claim 1, characterized in that it comprises, besides a pair of idle rollers (5,5′) installed on the frame of trolley (10) by means of bearings on their ends, a third idle roller (8) rotatably mounted at its ends on two respctive arms , being these arms in vertical position and pivoted, at their lower ends, on the trolley base (9), at the opposite side of said board (6) with respect to the other two idle rollers (5,5′), and under the elastic bias of springs (17,17′) to the inside of the trolley, said third idle roller (8) being parallel to the other two and at an higher level from base (9) than these latter ones.

6. Apparatus according to claim 5, characterized in that said transducer (1) is installed to one end of said third idle roller (8), on its external side, on the same side of handles (11) and of the integral drawer, if any, for tester (2).

7. Apparatus according to claims 4,5,6, characterized in that said idle roller (8) is sloped as well and in the direction of the other two (5,5′) being parallel thereto but at a higher level so that to contact the front side of the tread of a motor-vehicle wheel resting on idle rollers (5,5′).

_Fig.1_

_Fig.2_

_Fig.3_

Fig.4

Fig.5